# EUROPEAN PATENT SPECIFICATION

(11) **EP 3 822 068 B1**
(45) Date of publication and mention of the grant of the patent: **19.07.2023**
(21) Application number: 19382995.9
(22) Date of filing: 13.11.2019
(51) Int. Cl.: B29D 99/00, B29C 70/56, B29C 70/46

(54) **DEVICE AND METHOD FOR FORMING A COMPOSITE LAMINATE FOR OBTAINING A Z-SHAPED PROFILE**
VORRICHTUNG UND VERFAHREN ZUR AUSBILDUNG EINES VERBUNDLAMINATS ZUR HERSTELLUNG EINES Z-FÖRMIGEN PROFILS
DISPOSITIF ET PROCÉDÉ DE FORMATION D'UN STRATIFIÉ COMPOSITE POUR OBTENIR UN PROFILÉ EN FORME DE Z

(43) Date of publication of application: 19.05.2021
(73) Proprietor: Airbus Operations, S.L.U., 28906 Getafe (Madrid) (ES)
(72) Inventor: SÁNCHEZ PÉREZ, Melania, 28906 Getafe (ES); PÉREZ-PASTOR, Augusto, 28906 Getafe (ES); FERNÁNDEZ HORCAJO, Katia, 28906 Getafe (ES); ROMERO ESTEBAN, Salvador, 28906 Getafe (ES)
(74) Representative: Elzaburu S.L.P.

(56) References cited:
- EP-A1- 2 868 465
- EP-A2- 1 481 790
- WO-A1-2016/174400

## Description

### Field of the invention

The invention relates to a device and a method for forming a composite laminate, for instance, a continuous fiber reinforced stratified thermoplastic composite laminate, in order to obtain a profile having a straight or curved Z cross-section.

### Background of the invention

It is known to manufacture profiles from stratified thermoplastic composite materials which may incorporate one or several folds such that a Z-shaped profile is formed. Examples of these profiles are frames or stringers used in aircraft structures. The common manufacturing process for said profiles is by stamping processes or, alternatively, by continuous processes as pultrusion/extrusion.

These processes have some drawbacks when the curvature of the profiles is high.

Said known forming processes introduce wrinkles, particularly in curved Z-shaped structures, because a compression stress is applied to the different layers of the stratified laminate due to the direction of the folding when making the flanges of the profile.

For instance, in stamping processes, wrinkles appear due to the excess of material between the initial flat laminated and the final three dimensions shape of the profile.

Previously mentioned continuous processes are normally perfomed for nearly straight profiles but not for kinked profiles.

Therefore, no mature manufacturing processes are developed to cover complex profiles, as frames or stringers, especially in rear and nose fuselages having a radius of curvature smaller than 1 m.

Document EP2868465A1 discloses a method of manufacturing T-shaped stringers made of composite material, comprising a second shaping step for shaping laminates into L-shaped preforms, which comprises providing a set of tools formed by a fixed tool comprising a lower portion and an upper portion, and a moveable tool comprising a lower element and an upper element. It also comprises the segment of the laminate intended for the foot of the preform being located between the lower portion and the upper portion of the fixed tool, and the segment of the laminate intended for the web of the preform being located between the lower element and the upper element of the moveable tool. It further comprises vertically moving the moveable tool to progressively bend the web of the preform supporting it on a vertical wall of the fixed tool. The end of its web adopts a rounded shape.

### Summary of the invention

A first object of the invention is a device for forming a composite laminate for obtaining a

Z-shaped profile in accordance with claim 1. Specifically, the Z-shaped profile has three different areas, a web and two flanges a first and a second flange located at both ends of the web. Flanges can be flat or curved with respect to the longitudinal axis of the profile. Additionally, flanges may be parallel between them and may have different angles with respect to the web, being 90° the most common angle.

The device object of the invention comprises:
- A grip module comprising two plates. The grip module is configured to enclose and grip between the two plates, i.e., holding firmly, a first portion of the composite laminate to be formed. This first portion corresponds to the area of the laminate that will form the first flange after being formed.
- A feed module comprising two plates. The feed module is configured to enclose between the two plates a second portion of the composite laminate that is different from the first portion located in the grip module.

The feed module is configured to heat the portion of the composite laminate located between its two plates such that it reaches the corresponding melting point. The feed module is also configured to be movable with respect to the grip module in a direction parallel to the plane of the web of the composite profile (1) once it is formed. Said movement is performed between the following two positions:
- a first position in which the two plates enclose the portion of the composite laminate corresponding to the area of the composite laminate that will form the web and the second flange, and
- a second position in which the two plates enclose the portion of the composite laminate corresponding to the area of the composite laminate that will form the second flange.

During the movement between the first and second positions, the portion of the composite laminate corresponding to the web slides out of the two plates of the feed module due to the relative movement between the grip module (5) and the feed module. The device comprises a temperature resistant release film located over the surfaces of the plates of the feed module configured to be in contact with the composite laminate to reduce the friction coefficient between the plate and the composite laminate.

The forming device is thus divided into two different modules, the grip module and the feed module. The feed module encloses the larger laminate area at the beginning of the process and also feeds the web formation.

The plates of each module are holding the laminate, gripping the laminate in the grip module and allowing a sliding movement of the laminate in the feeding module.

The feed module moves parallel to the plane of the web while forming the profile. Therefore, the forming process is thus performed always in a direction that avoids excess of material. Moreover, the laminate is subjected to tensile stress induced by the movement of the feed module with respect to the grip module, thus producing the final shape and a fully consolidated component and avoiding wrinkle formation.

According to the above, for instance for a Z-shaped profile having flanges forming 90º with the web, the feed module, with the laminate in the interior, move parallel to the web plane, i.e. in a plane perpendicular to the plane of the flange. Thus, the movement turns the laminate direction in the web area and produces the flange bending radius.

As previously stated, this relative displacement, preferably at low speed in order to allow the sliding between the fibres, avoids the formation of wrinkles.

The area of the laminate intended to be in the web of the profile, it is therefore, enclosed between the feed module's plates at the beginning of the process and it is pulled out the feed module during the process as the grip module rigidly holds the first flange during the movement of the feed module. Thus, the web is formed during the movement from the material heated in the feed module.

The device object of the invention thus performs an effective process in which a thermoplastic composite laminate is formed avoiding wrinkle formation.

The invention is applicable to straight and curved Z-shaped profiles.

This invention also applies to different carbon fibre reinforced thermoplastic composite laminates, the one composed of unidirectional fibre plies and the one composed of fabric fibre plies.

In addition, this invention applies to different zero state laminate before forming, only welded -where the plies building the laminate are joined together with only small welded areas- and pre-consolidated - where the laminate has undergone a consolidation process in order to obtain a rigid body laminate-.

The device object of the invention is also responsible for heating transmission to the laminate in order the laminate can reach the melting state to be formed. The heat contribution to the laminate through the tool is produced by contact.

It is also an object of the invention a method for forming a composite laminate for obtaining a Z-shaped profile as defined in claim 6. The method comprises the following steps:
- providing a grip module comprising two plates,
- providing a feed module comprising two plates,
- enclosing a first portion of the laminate between the two plates of the grip module in the area of the laminate that will form the first flange,
- enclosing a second portion of the laminate different than the first portion located in the grip module between the two plates of the feed module,
- heating the portion of the laminate located in the feed module,
- moving the feed module with respect to the grip module in a direction parallel to the direction that the web plane of the profile will have once formed between:
   ∘ a first position in which the two plates enclose the laminate in the area of the composite laminate that will form the web and the second flange, and
   ∘ a second position in which the two plates enclose the area of the composite laminate corresponding to the second flange,
such that during the movement between the first and second positions, the area of the composite laminate forming the web slides out of the two plates of the feed module due to the relative movement between the grip module and the feed module.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows a schematic perspective view of a curved Z-shaped profile.
Figure 2 shows a schematic cross section of an embodiment of the device object of the invention in a first and a second position and the movement that the feed module performs to reach the second position.

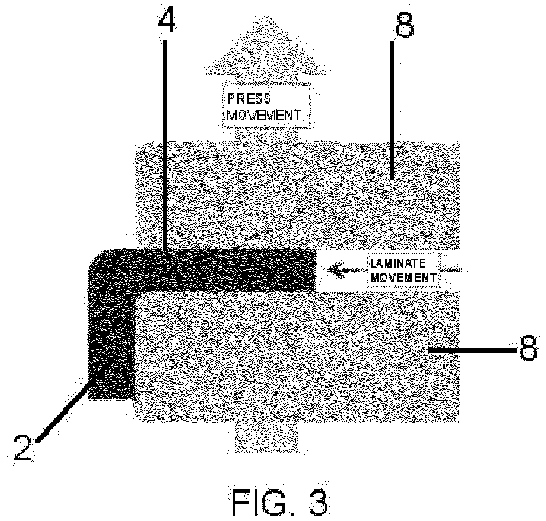

Figure 3 shows an enlarged view of the schematic cross section of the embodiment of figure 2 showing the feed module into the second position.

### Detailed description of the invention

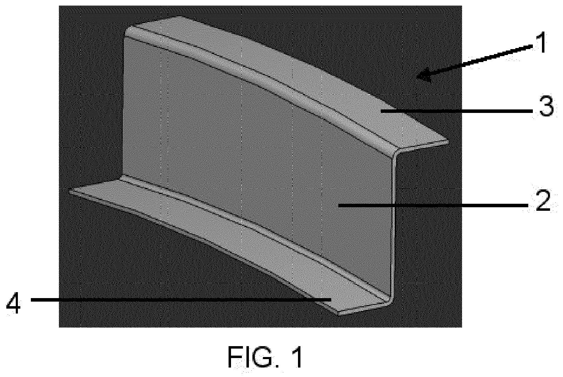

Figure 1 shows an embodiment of a Z-shaped profile (1) formed by a composite stratified laminate with a flat central surface or web (2) and two flanges (3, 4) forming 90º with the web (2) in a cross-section. The profile (1) is a curved profile (1), i.e., in its longitudinal direction it describes a curve. The invention can be applied to straight Z-shaped profiles and curved Z-shaped profiles.

In this Z-shaped profile (1) two straight radii with a hinge axis perpendicular to the forming movement direction can be found.

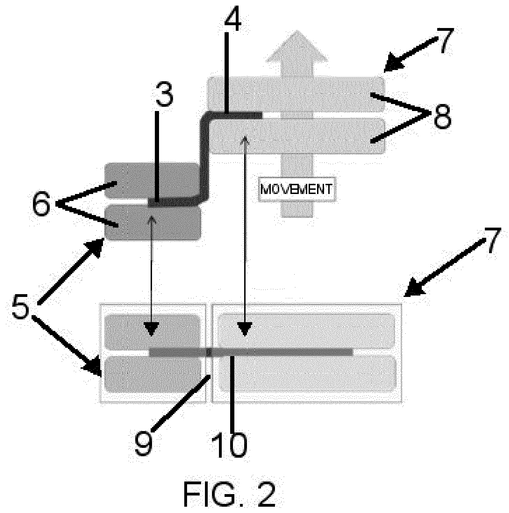

Figure 2 shows the following elements:
- A grip module (5) comprising two plates (6). The grip module (5) enclosing and gripping a first portion of the composite laminate (10) that will form the first flange (3).
- A feed module (7) comprising two plates (8).

The feed module moves with respect to the grip module (5) in the direction parallel to the plane of the web (2) of the composite profile (1).

In the first position, the two plates (8) of the feed module (7) enclose the portion of the composite laminate (10) corresponding to the area of the composite laminate (10) that will form the web (2) and the second flange (4).

In the second position in which the two plates (8) enclose the portion of the composite laminate (10) corresponding to the area of the composite laminate (10) that will form the second flange (4).

During the movement between the first and second positions, the portion of the composite laminate (10) corresponding to the web (2) slides out of the two plates (8) of the feed module (7) due to the relative movement between the grip module (5) and the feed module (7).

Specifically, in the first position, the grip module (5) and the feed module (7) are located facing each other such that the composite laminate (10) depicts a flat plane.

Preferably, the inner surfaces of the plates (6) of the grip module (5) apply a uniform load to the composite laminate (10). Said surfaces may also be treated to increase the grip effect.

In the shown embodiment, the device comprises a gap (9) between the grip module (5) and the feed module (7) in the direction perpendicular to the plane of the plates (6, 8), said gap (9) configured to have the thickness of the laminate (10).

The heat contribution to the feed module (7) may have two different embodiments:
- by contact between the feed module and the environment, either with the hot press plate or the heated surround environment, and
- by auto-heated internal plates.

For curves flanges (3, 4), the grip and feed modules (5, 7) comprise one of the planes of their plates (6, 8) in contact with the composite laminate (10) of each module (5, 7) concaves and the other convex to perform said curved flanges (3, 4).

For instance, the grip module (5) may comprise a concave principal lower plate (5) where the corresponding portion of composite laminate (10) is placed and a convex cover or upper plate (5) to hold down this portion of the composite laminate (10). The feeding module (7) comprising a convex principal upper plate (8) and a concave cover or upper plate (8) to enclose its corresponding portion of laminate (10).

Specifically, in the shown embodiment, curved flanges (3, 4) are curved around an axis perpendicular to the web (2) plane.

In order to reduce friction coefficient between the composite laminate (10) and the plates (6, 8), a high temperature resistance release film can be located over the surfaces of the plates (6, 8) configured to be in contact with the composite laminate (10) to reduce the friction coefficient between the plates (6, 8) and the composite laminate (10). The release film shall be located mainly within the feeding area. An example of a release film may be a polyimide film.

## Claims

1. Device for forming a composite laminate (10) for obtaining a Z-shaped profile (1), the Z-shaped profile (1) comprising a web (2) and a first (3) and a second (4) flange located at both ends of the web (2), the device comprising:
- a grip module (5) comprising two plates (6), the grip module (5) configured to enclose and grip between the two plates (6) a first portion of the composite laminate (10) to be formed corresponding to the area of the laminate (10) that will form the first flange (3),
- a feed module (7) comprising two plates (8), the feed module (7) configured to enclose between the two plates (8) a second portion of the composite laminate (10) different from the first portion located in the grip module (5),
the feed module (7) configured to heat the portion of the composite laminate (10) located between its two plates (8) and configured to be movable with respect to the grip module (5) in a direction parallel to the plane of the web (2) of the composite profile (1) once formed, between:
- a first position in which the two plates (8) enclose the portion of the composite laminate (10) corresponding to the area of the composite laminate (10) that will form the web (2) and the second flange (4), and
- a second position in which the two plates (8) enclose the portion of the composite laminate (10) corresponding to the area of the composite laminate (10) that will form the second flange (4),
such that during the movement between the first and second positions, the portion of the composite laminate (10) corresponding to the web (2) slides out of the two plates (8) of the feed module (7) due to the relative movement between the grip module (5) and the feed module (7),
the device **characterised in that** it comprises a temperature resistant release film located over the surfaces of the plates (8) of the feed module (7) configured to be in contact with the composite laminate (10) to reduce the friction coefficient between the plate (8) and
the composite laminate (10).

2. Device for forming a composite laminate (10) for obtaining a Z-shaped profile (1), according to claim 1, wherein in the first position, the grip module (5) and the feed module (7) are located facing each other (5, 7) such that the composite laminate (10) depicts a flat plane.

3. Device for forming a composite laminate (10) for obtaining a Z-shaped profile (1), according to claim 2, wherein in the first position, the device comprises a gap (9) between the grip module (5) and the feed module (7), the gap (9) being configured to have the thickness of the composite laminate (10).

4. Device for forming a composite laminate (10) for obtaining a Z-shaped profile (1), according to any preceding claim, wherein the plates (8) of the feed module (7) are auto-heated.

5. Device for forming a composite laminate (10) for obtaining a Z-shaped profile (1), according to any preceding claim, wherein each of the grip (5) and feed (7) modules comprises one of its plates (6, 8) concave and the other plate (6, 8) convex to form curved flanges (3, 4).

6. Method for forming a composite laminate (10) for obtaining a Z-shaped profile (1), the Z-shaped profile (1) comprising a web (2) and a first (3) and a second (4) flange located at both ends of the web (2), the method **characterised in that** it comprises the following steps:
- providing a grip module (5) comprising two plates (6),
- providing a feed module (7) comprising two plates (8) and a temperature resistant release film located over the surfaces of the plates (8),
- enclosing a first portion of the laminate (10) between the two plates (6) of the grip module (5) in the area of the laminate (10) that will form the first flange (3),
- enclosing a second portion of the laminate (10) different than the first portion located in the grip module (5) between the two plates (8) of the feed module (7), the temperature resistant release film in contact with the composite laminate (10) to reduce the friction coefficient between the plate (8) and the composite laminate (10),
- heating the portion of the laminate (10) located in the feed module (7),
- moving the feed module (7) with respect to the grip module (5) in a direction parallel to the direction that the web plane (2) of the profile (1) will have once formed between:
∘ a first position in which the two plates (8) enclose the laminate (10) in the area of the composite laminate (10) that will form the web (2) and the second flange (4), and
∘ a second position in which the two plates (8) enclose the area of the composite laminate (10) corresponding to the second flange (4),
such that during the movement between the first and second positions, the area of the composite laminate (10) forming the web (2) slides out of the two plates (8) of the feed module (7) due to the relative movement between the grip module (5) and the feed module (7).

## Patentansprüche

1. Vorrichtung zum Ausbilden eines Verbundlaminats (10) zum Erhalten eines Z-förmigen Profils (1), das Z-förmige Profil (1) umfassend einen Steg (2) und einen ersten (3) und einen zweiten (4) Flansch an beiden Enden des Stegs (2), die Vorrichtung umfassend:
- ein Greifmodul (5), umfassend zwei Platten (6), wobei das Greifmodul (5) dazu konfiguriert ist, zwischen den beiden Platten (6) einen ersten Abschnitt des auszubildenden Verbundlaminats (10) entsprechend der Fläche des Laminats (10), das den ersten Flansch (3) ausbilden wird, zu umschließen und zu greifen,
- ein Zuführmodul (7), umfassend zwei Platten (8), wobei das Zuführmodul (7) dazu konfiguriert ist, zwischen den beiden Platten (8) einen zweiten, von dem in dem Greifmodul (5) befindlichen ersten Abschnitt verschiedenen, Abschnitt des Verbundlaminats (10) zu umschließen, wobei das Zuführmodul (7) dazu konfiguriert ist, den Abschnitt des Verbundlaminats (10) zu erwärmen, der sich zwischen seinen beiden Platten (8) befindet, und dazu konfiguriert ist, in Bezug auf das Greifmodul (5) in einer Richtung parallel zu der Ebene des Stegs (2) des einmal ausgebildeten Verbundprofils (1) beweglich zu sein, zwischen:
- einer ersten Position, in der die beiden Platten (8) den Abschnitt des Verbundlaminats (10) entsprechend dem Bereich des Verbundlaminats (10) umschließen, der den Steg (2) und den zweiten Flansch (4) ausbilden wird, und
- einer zweiten Position, in der die beiden Platten (8) den Abschnitt des Verbundlaminats (10) entsprechend dem Bereich des Verbundlaminats (10) umschließen, der den zweiten Flansch (4) ausbilden wird,
sodass bei der Bewegung zwischen der ersten und zweiten Position der dem Steg (2) entsprechende Abschnitt des Verbundlaminats (10) aufgrund der Relativbewegung zwischen dem Greifmodul (5) und dem Zuführmodul (7) aus den beiden Platten (8) des Zuführmoduls (7) herausgleitet,
wobei die Vorrichtung **dadurch gekennzeichnet ist, dass** sie eine temperaturbeständige Trennfolie umfasst, die sich über den Oberflächen der Platten (8) des Zuführmoduls (7) befindet und dazu konfiguriert ist, mit dem Verbundlaminat (10) in Berührung zu stehen, um den Reibungskoeffizienten zwischen der Platte (8) und dem Verbundlaminat (10) zu verringern.

2. Vorrichtung zum Ausbilden eines Verbundlaminats (10) zum Erhalten eines Z-förmigen Profils (1) nach Anspruch 1, wobei in der ersten Position das Greifmodul (5) und das Zuführmodul (7) einander zugewandt angeordnet sind (5, 7), sodass das Verbundlaminat (10) eine flache Ebene darstellt.

3. Vorrichtung zum Ausbilden eines Verbundlaminats (10) zum Erhalten eines Z-förmigen Profils (1) nach Anspruch 2, wobei die Vorrichtung in der ersten Position einen Spalt (9) zwischen dem Greifmodul (5) und dem Zuführmodul aufweist (7), wobei der Spalt (9) dazu konfiguriert ist, die Dicke des Verbundlaminats (10) aufzuweisen.

4. Vorrichtung zum Ausbilden eines Verbundlaminats (10) zum Erhalten eines Z-förmigen Profils (1) nach einem der vorhergehenden Ansprüche, wobei die Platten (8) des Zuführmoduls (7) automatisch erhitzt werden.

5. Vorrichtung zum Ausbilden eines Verbundlaminats (10) zum Erhalten eines Z-förmigen Profils (1) nach einem der vorhergehenden Ansprüche, wobei jedes des Greif- (5) und des Zuführmoduls (7) eine seiner Platten (6, 8) in konkaver Form und die andere Platte (6, 8) in konvexer Form umfasst, um gekrümmte Flansche (3, 4) auszubilden.

6. Verfahren zum Ausbilden eines Verbundlaminats (10) zum Erhalten eines Z-förmigen Profils (1), das Z-förmige Profil (1) umfassend einen Steg (2) und einen ersten (3) und einen zweiten (4) Flansch an beiden Enden des Stegs (2), wobei das Verfahren **dadurch gekennzeichnet ist, dass** es die folgenden Schritte umfasst:
- Bereitstellen eines Greifmoduls (5), umfassend zwei Platten (6),
- Bereitstellen eines Zuführmoduls (7), umfassend zwei Platten (8) und eine über den Oberflächen der Platten (8) angeordnete temperaturbeständige Trennfolie,
- Einschließen eines ersten Abschnitts des Laminats (10) zwischen den beiden Platten (6) des Greifmoduls (5) in dem Bereich des Laminats (10), der den ersten Flansch (3) ausbilden wird,
- Einschließen eines zweiten Abschnitts des Laminats (10), der sich von dem ersten Abschnitt unterscheidet, welcher sich in dem Greifmodul (5) befindet, zwischen den beiden Platten (8) des Zuführmoduls (7), wobei die temperaturbeständige Trennfolie in Berührung mit dem Verbundlaminat steht (10), um den Reibungskoeffizienten zwischen der Platte (8) und dem Verbundlaminat (10) zu verringern,
- Erhitzen des in dem Zuführmodul (7) befindlichen Abschnitts des Laminats (10),
- Bewegen des Zuführmoduls (7) in Bezug auf das Greifmodul (5) in einer Richtung parallel zu der Richtung, in der sich die Stegebene (2) des Profils (1) ausbilden wird, zwischen:
∘ einer erste Position, in der die beiden Platten (8) das Laminat (10) in dem Bereich des Verbundlaminats (10) umschließen, der den Steg (2) und den zweiten Flansch (4) ausbilden wird, und
∘ einer zweite Position, in der die beiden Platten (8) den Bereich des Verbundlaminats (10) umschließen, der dem zweiten Flansch (4) entspricht,
sodass bei der Bewegung zwischen der ersten und zweiten Position der den Steg (2) ausbildende Bereich des Verbundlaminats (10) aufgrund der Relativbewegung zwischen dem Greifmodul (5) und dem Zuführmodul (7) aus den beiden Platten (8) des Zuführmoduls (7) herausgleitet.

## Revendications

1. Dispositif de formation d'un stratifié composite (10) pour obtenir un profilé en forme de Z (1), le profilé en forme de Z (1) comprenant une bande (2) et une première (3) et une deuxième (4) bride situées au niveau des deux extrémités de la bande (2), le dispositif comprenant :
- un module de serrage (5) comprenant deux plaques (6), le module de serrage (5) étant configuré pour enfermer et serrer entre les deux plaques (6) une première portion du stratifié composite (10) à former correspondant à la zone du stratifié (10) qui formera la première bride (3),
- un module d'alimentation (7) comprenant deux plaques (8), le module d'alimentation (7) étant configuré pour enfermer entre les deux plaques (8) une deuxième portion du stratifié composite (10) différente de la première portion située dans le module de serrage (5),
le module d'alimentation (7) étant configuré pour chauffer la portion du stratifié composite (10) située entre ses deux plaques (8) et configurée pour être mobile par rapport au module de serrage (5) dans une direction parallèle au plan de la bande (2) du profilé composite (1) un temps formé, entre :
- une première position dans laquelle les deux plaques (8) enferment la portion du stratifié composite (10) correspondant à la zone du stratifié composite (10) qui formera la bande (2) et la deuxième bride (4), et
- une deuxième position dans laquelle les deux plaques (8) enferment la portion du stratifié composite (10) correspondant à la zone du stratifié composite (10) qui formera la deuxième bride (4),
de telle sorte que pendant le déplacement entre les première et deuxième positions, la portion du stratifié composite (10) correspondant à la bande (2) coulisse hors des deux plaques (8) du module d'alimentation (7) en raison du déplacement relatif entre le module de serrage (5) et le module d'alimentation (7), le dispositif étant **caractérisé en ce qu'**il comprend un film de libération résistant à la température situé sur les surfaces des plaques (8) du module d'alimentation (7) configuré pour être en contact avec le stratifié composite (10) afin de réduire le coefficient de frottement entre la plaque (8) et le stratifié composite (10).

2. Dispositif de formation d'un stratifié composite (10) pour obtenir un profilé en forme de Z (1), selon la revendication 1, dans lequel dans la première position, le module de serrage (5) et le module d'alimentation (7) sont situés l'un en face de l'autre (5, 7) de telle sorte que le stratifié composite (10) représente un plan plat.

3. Dispositif de formation d'un stratifié composite (10) pour obtenir un profilé en forme de Z (1), selon la revendication 2, dans lequel dans la première position, le dispositif comprend un espace (9) entre le module de serrage (5) et le module d'alimentation (7), l'espace (9) étant configuré pour avoir l'épaisseur du stratifié composite (10).

4. Dispositif de formation d'un stratifié composite (10) pour obtenir un profilé en forme de Z (1), selon l'une quelconque des revendications précédentes, dans lequel les plaques (8) du module d'alimentation (7) sont auto-chauffées.

5. Dispositif de formation d'un stratifié composite (10) pour obtenir un profilé en forme de Z (1), selon l'une quelconque des revendications précédentes, dans lequel chaque module parmi les modules de serrage (5) et d'alimentation (7) comprend l'une de ses plaques (6, 8) concave et l'autre plaque (6, 8) convexe pour former des brides incurvées (3, 4).

6. Procédé de formation d'un stratifié composite (10) pour obtenir un profilé en forme de Z (1), le profilé en forme de Z (1) comprenant une bande (2) et une première (3) et une deuxième (4) bride situées au niveau des deux extrémités de la bande (2), le procédé étant **caractérisé en ce qu'**il comprend les étapes consistant à :
- fournir un module de serrage (5) comprenant deux plaques (6),
- fournir un module d'alimentation (7) comprenant deux plaques (8) et un film de libération résistant à la température situé sur les surfaces des plaques (8),
- enfermer une première portion du stratifié (10) entre les deux plaques (6) du module de serrage (5) dans la zone du stratifié (10) qui formera la première bride (3),
- enfermer une deuxième portion du stratifié (10) différente de la première portion située dans le module de serrage (5) entre les deux plaques (8) du module d'alimentation (7), le film de libération résistant à la température étant en contact avec le stratifié composite (10) pour réduire le coefficient de frottement entre la plaque (8) et le stratifié composite (10),
- chauffer la portion du stratifié (10) située dans le module d'alimentation (7),
- déplacer le module d'alimentation (7) par rapport au module de serrage (5) dans une direction parallèle à la direction que le plan de bande (2) du profilé (1) aura un temps formé entre :
∘ une première position dans laquelle les deux plaques (8) entourent le stratifié (10) dans la zone du stratifié composite (10) qui formera la bande (2) et la deuxième bride (4), et
∘ une deuxième position dans laquelle les deux plaques (8) enferment la zone du stratifié composite (10) correspondant à la deuxième bride (4),
de telle sorte que pendant le déplacement entre les première et deuxième positions, la zone du stratifié composite (10) formant la bande (2) coulisse hors des deux plaques (8) du module d'alimentation (7) en raison du déplacement relatif entre le module de serrage (5) et le module d'alimentation (7).
